# FASCICULE DE BREVET EUROPEEN

(11) **EP 1 881 574 B1**
(45) Date de publication et mention de la délivrance du brevet: **07.03.2018**
(21) Numéro de dépôt: 07354032.0
(22) Date de dépôt: 04.06.2007
(51) Int. Cl.: H02B 1/20, H01R 9/26, H01R 31/08

(54) **Dispositif de répartition de l'alimentation de puissance électrique pour une rangée d'appareils modulaires dans un tableau électrique**
Vorrichtung zur Aufteilung der Leistungsstromversorgung für eine Reihe von modularen Geräten in einer elektrischen Schalttafel
Device for distributing the electric power supply for a row of modular devices in an electric board

(30) Priorité: 20.07.2006 FR 0606602
(43) Date de publication de la demande: 23.01.2008
(73) Titulaire: Schneider Electric Industries SAS, 92500 Rueil-Malmaison (FR)
(72) Inventeur: Lebeau, Bernard, Schneider Electric Industries SAS, 38050 Grenoble Cedex 09 (FR); Diconne, Robert, Schneider Electric Industries SAS, 38050 Grenoble Cedex 09 (FR); Suptitz, Eric, Schneider Electric Industries SAS, 38050 Grenoble Cedex 09 (FR); Vernay, Marc, Schneider Electric Industries SAS, 38050 Grenoble Cedex 09 (FR)
(74) Mandataire: Tripodi, Paul

(56) Documents cités:
- EP-A- 1 058 348
- EP-A- 1 137 034
- EP-A1- 0 639 877
- EP-A1- 0 798 819
- DE-C1- 19 748 530
- FR-A- 2 238 265
- FR-A1- 2 873 502

## Description

La présente invention concerne un dispositif de répartition de l'alimentation de puissance électrique pour une rangée d'appareils modulaires tels des disjoncteurs, ledit dispositif étant logé dans un boîtier, et comprenant un ensemble de barres d'alimentation disposées sensiblement parallèlement entre elles, lesdites barres comprenant un certain nombre de barres reliées électriquement respectivement aux différentes phases électriques, et une barre de neutre distribuant le neutre, le dispositif comportant des moyens de connexion desdites barres aux différents appareils électriques précités, ledit dispositif de répartition comportant également un dispositif de raccordement électrique du dispositif de répartition au dispositif d'alimentation électrique desdites barres.

On connaît des peignes de raccordement comportant un certain nombre de barres conductrices parallèles à partir desquelles s'étendent des dents sensiblement perpendiculairement à l'axe longitudinal desdites barres, lesdites dents distribuant successivement les différentes phases et le neutre, et ce de manière répétitive le long du peigne. Dans cette réalisation les appareils se raccordent directement au peigne au moyen de bornes à vis.

On connaît également un répartiteur comportant un certain nombre de barres horizontales logées dans un boîtier, à chacune des barres correspondant une ligne de répartition, le dit dispositif de répartition distribuant sur chaque pas du répartiteur toutes les phases et le neutre.
Ce dispositif est alimenté électriquement par un dispositif d'alimentation situé à l'une des extrémités du répartiteur dans un encombrement en hauteur correspondant à l'encombrement en hauteur du répartiteur.

Dans ce type de dispositif, les systèmes de traitement de signalisation et/ou de commande nécessitent d'être placés quelque part dans le tableau en général sous la rangée d'appareils modulaires, et nécessitent un raccordement fil à fil vers les appareils modulaires d'où un encombrement important de l'ensemble.

Le document FR 2 873 502 décrit un dispositif comportant les caractéristiques du préambule de la revendication 1.

La présente invention résout ce problème et propose un dispositif de répartition de conception simple améliorant la compacité des systèmes actuels.

A cet effet, la présente invention a pour objet un dispositif de répartition de l'alimentation de la puissance électrique selon la revendication 1.

Selon une réalisation particulière de l'invention, le dispositif de raccordement précité est situé d'un côté du dispositif de répartition, et le dispositif de traitement de signal et/ou de commande est situé dans l'alignement du dispositif de raccordement électrique précité du répartiteur, dans l'encombrement en hauteur de ce dispositif de raccordement.

Selon une réalisation particulière, chaque ensemble de bornes comporte sur une ligne de répartition un certain nombre de bornes de phase et sur une autre ligne de répartition, un même nombre de bornes de neutre.

Selon une caractéristique particulière, le dispositif de traitement de signalisation et/ou de commande comporte un bus de communication.

Selon une autre caractéristique, le système de traitement de signalisation et/ou de commande est associé à au moins un bornier destiné à relier les liaisons filaires de signalisation et/ou de commande de l'appareillage modulaire à un même bus de communication.

Selon une autre caractéristique particulière, les moyens de connexion précités du répartiteur comportent des bornes du type à raccordement élastiques telles des bornes dites quart de tour, des systèmes à déplacement d'isolant ou des systèmes embrochables.

Selon une autre caractéristique, ies barres sont reliées auxdites bornes par des éléments conducteurs coudés.

Selon une réalisation particulière, l'une au moins des barres est (sont) disposée(s) verticalement à l'arrière du répartiteur et les moyens de connexion précités comprennent des connecteurs plats reliés à la barre correspondante par une partie coudée à 90°.

Selon une autre réalisation, l'une au moins des barres est (sont) disposée(s) horizontalement à plat, et les moyens de connexion précités comportent des connecteurs plats reliés à la barre correspondante par une partie coudée deux fois à angle droit.

Selon une autre réalisation, le dispositif de raccordement précité est situé le long du répartiteur.

Selon une caractéristique particulière, ce dispositif comporte une première partie fixe comportant les barres et une seconde partie mobile comportant le dispositif de traitement.

Selon une autre réalisation, le dispositif de répartition comporte une première partie comportant les barres et une seconde partie comportant le dispositif de traitement, les deux parties étant logées dans un même boîtier.

La présente invention a encore pour objet un dispositif de répartition de l'alimentation de puissance électrique pour une rangée d'appareils modulaires tels des disjoncteurs, ledit dispositif étant logé dans un boîtier, et comprenant un ensemble de barres d'alimentation disposées sensiblement parallèlement entre elles, lesdites barres comprenant un certain nombre de barres reliées électriquement respectivement aux différentes phases électriques, et une barre de neutre distribuant le neutre, ledit dispositif comportant des moyens de connexion des barres aux différents appareils électriques précités et également un dispositif de raccordement électrique du dispositif de répartition au dispositif d'alimentation électrique desdites barres, ce dispositif étant caractérisé en ce que les moyens de connexion précités sont agencés de manière à présenter sur chaque pas du répartiteur un ensemble de bornes de neutre et de phases, cet ensemble étant disposé de manière répétitive le long du répartiteur et comprenant sur une ligne de répartition un certain nombre de bornes de phases et sur une autre ligne de répartition un même nombre de bornes de neutre.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue de côté illustrant un répartiteur alimentant une série d'appareils modulaires placés sur un rail de montage.
- La figure 2 est une vue en perspective du répartiteur de la figure précédente sous sa forme complète,
- La figure 3 est une vue en perspective d'un répartiteur sans dispositif de traitement de signalisation et/ou de commande selon la figure 2,
- La figure 3a illustre dans une représentation schématique, une réalisation particulière de l'agencement des moyens de connexion du dispositif de répartition,
- La figure 4 est une vue en perspective de la partie du dispositif de répartition comportant un dispositif de traitement de signal seul,
- La figure 5 est une vue en perspective, illustrant la partie intérieure du répartiteur sans le dispositif de traitement, selon une réalisation particulière du dispositif de raccordement du dispositif de répartition au dispositif d'alimentation électrique,
- La figure 5a est une représentation schématique, illustrant dans une vue de côté, les appareils et le dispositif de répartition selon une réalisation particulière du dispositif de répartition,
- La figure 5b est une vue identique à la figure 5a, illustrant une autre réalisation du dispositif de répartition,
- La figure 6 est une vue éclatée de la figure 5,

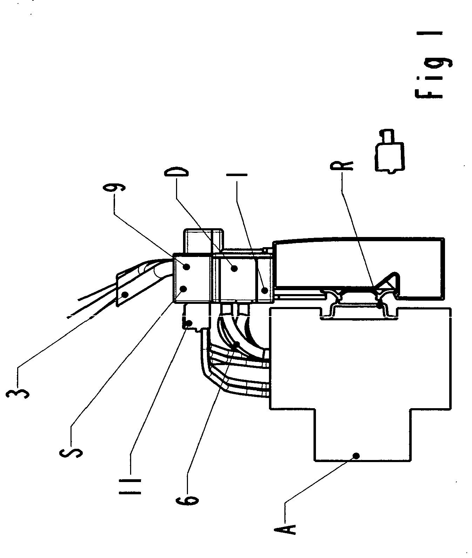

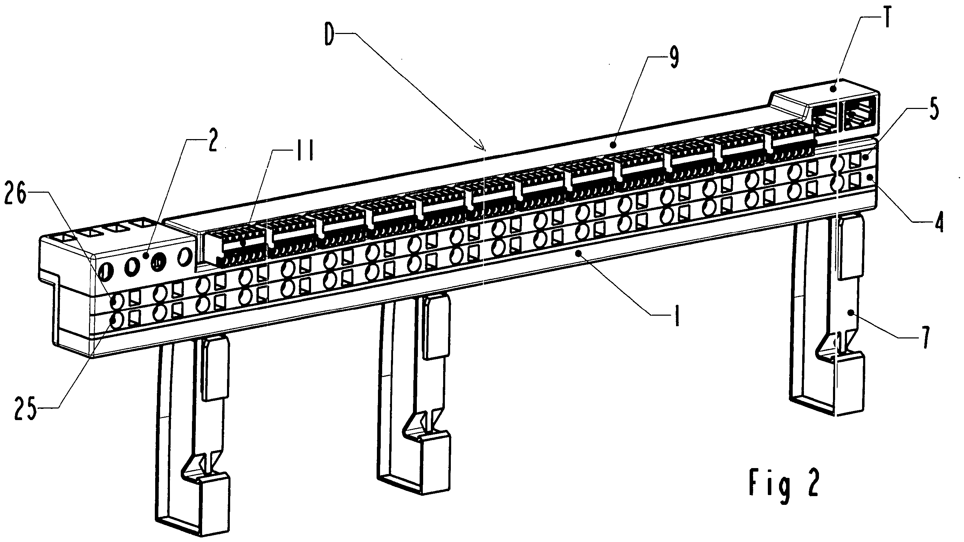

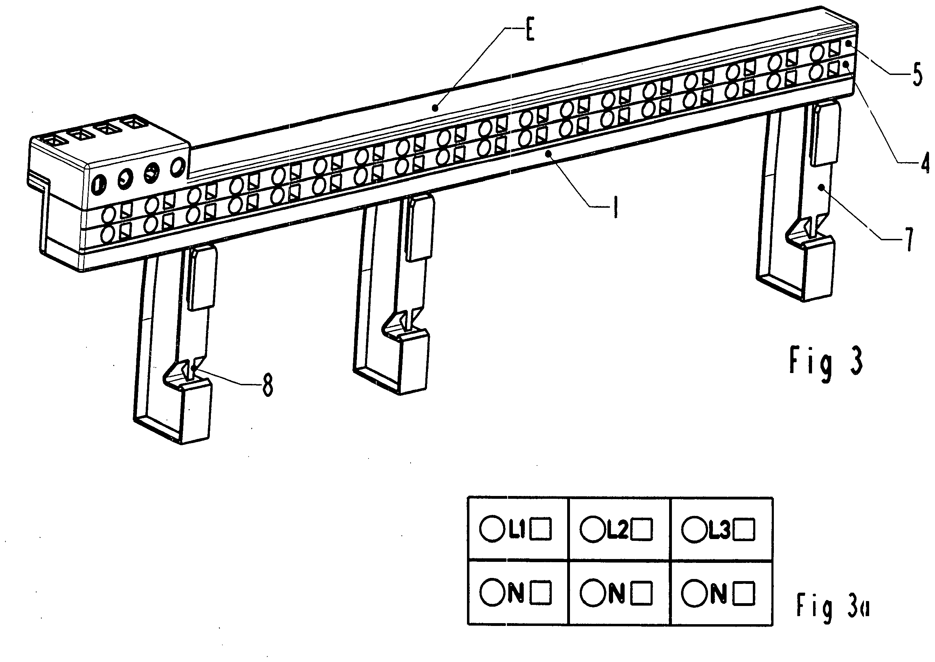

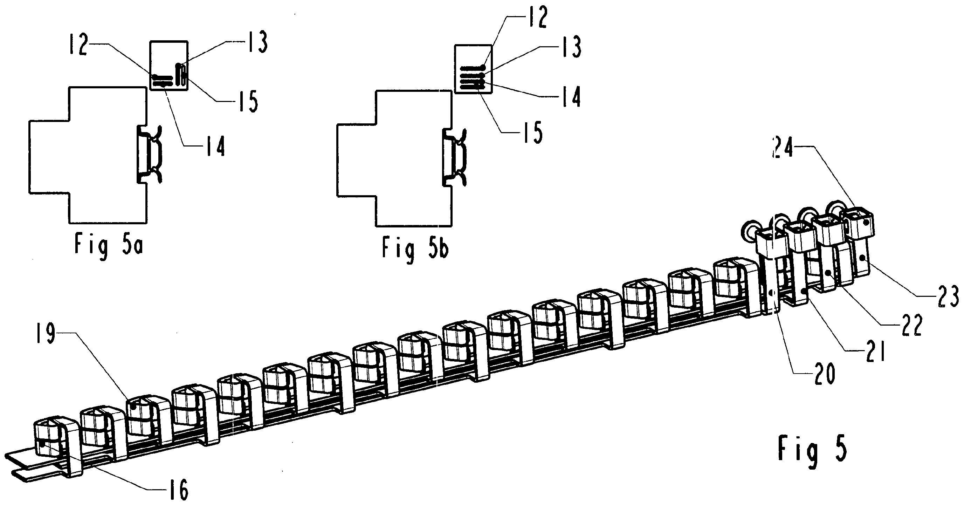

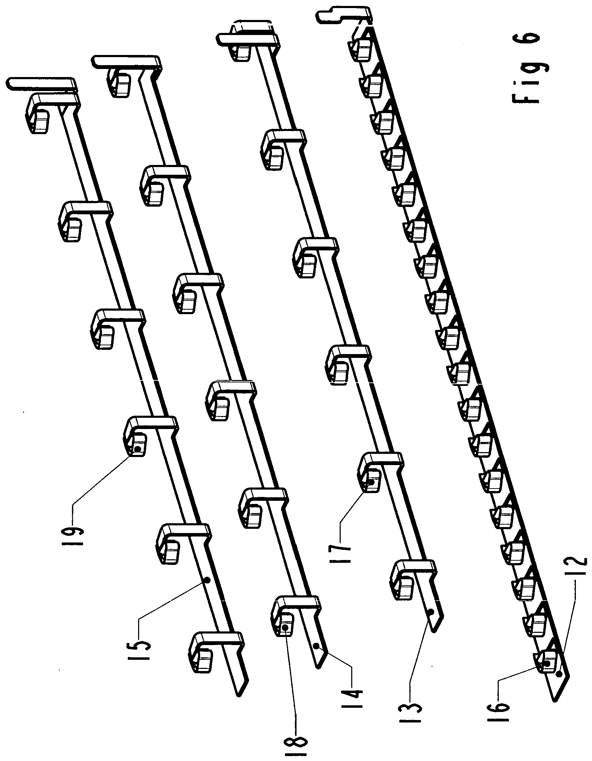

Sur la figure 1, on voit une rangée d'appareils électriques modulaires A appartenant à un tableau électrique et comprenant des disjoncteurs, des interrupteurs différentiels etc. montés sur un rail de montage R et alimentés en puissance électrique par un dispositif de répartition de puissance D selon l'invention du type tripolaire et neutre.
Ce dispositif de répartition D selon l'invention, ou répartiteur, également représenté sur la figure 2, comporte une première partie 1 représentée seule sur la figure 3, logée dans un boîtier et comprenant un dispositif de raccordement électrique 2 dudit répartiteur à un dispositif d'alimentation électrique 3 (fig.1), ledit dispositif de raccordement étant situé à l'une des extrémités du répartiteur D. Cette partie 1 présente deux lignes de répartition 4,5 s'étendant d'une extrémité à l'autre du répartiteur, à savoir une ligne de répartition du neutre 4 située à la partie inférieure du répartiteur D et une ligne de distribution des phases 5 située au dessus de la ligne de répartition du neutre 4. Cette ligne de répartition des phases 5 distribue successivement les phases 1 ,2 et 3 tel qu'illustré sur la figure 3a, et ce de manière répétitive le long du répartiteur D. Ainsi, le répartiteur distribue sur chaque pas du répartiteur une borne de neutre 25 (fig.2) sur une ligne de répartition 4 et une borne de phase 26 sur autre une ligne de répartition 5.
Les appareils A sont reliés électriquement aux lignes de répartition précitées 4,5 au moyen de câbles 6 raccordés par l'une de leurs extrémités aux bornes des appareils A et par leur extrémité opposée à des moyens de connexion 16,17,18,19 sous forme de bornes du type à raccordement rapide logées à l'intérieur du répartiteur (représentées sur les figures 5 et 6). Cette partie 1 du répartiteur R comporte également des pieds 7, lesdits pieds 7 comportant des moyens d'accrochage 8 pour un rail R supportant les appareils électriques.

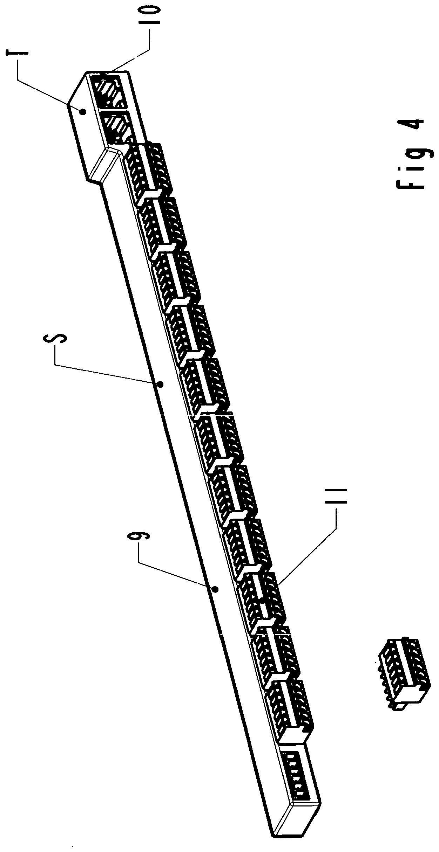

Ce dispositif de répartition D comporte également une seconde partie 9 mobile représentée seule sur la figure 4 et comportant un dispositif de traitement T, cette partie 9 étant destinée à être placée au dessus des lignes de répartition 4,5 de la première partie 1 et alimentée par un dispositif d'alimentation dit second 10, situé à l'extrémité du dispositif de répartition, opposée à celle à laquelle se trouve le dispositif d'alimentation 3 de puissance du répartiteur.
Cette partie 9 comporte également tel qu'illustré sur la figure 4, des borniers 11 aptes à relier électriquement les liaisons filaires de contrôle et de signalisation d'état de l'appareillage modulaire à un même bus de communication S.

Sur les figures 5 et 6 est représentée la partie intérieure de la première partie 1 du répartiteur, celle-ci comportant quatre barres conductrices 12,13,14,15 disposées horizontalement, à savoir une barre 12 distribuant le neutre et trois barres 13,14,15 distribuant les phases situées au dessus de la barre 12 distribuant le neutre.
Sur cette barre de neutre 12 sont fixées des pinces à ressort 16 constituant les bornes de neutre et destinées à recevoir les câbles issus des appareils destinés à être reliés au neutre. Les barres 13,14,15 distribuant les phases sont reliées électriquement chacune à une pince à ressort 17,18,19, lesdites pinces associées aux barres de phase étant situées chacune au-dessus d'une pince 16 associée à la barre de neutre 12.
Selon la réalisation illustrée sur les figures, le dispositif de raccordement 2 au dispositif d'alimentation 3 comporte, pour chacune des barres, et situé à l'extrémité des barres, un élément de connexion sous forme de dent 20,21,22,23, destiné à coopérer avec une borne à vis 24 tel qu'illustré sur la figure 5.

On notera que l'invention ne se limite pas à la réalisation illustrée sur les dessins mais bien d'autres réalisations de l'invention sont possibles.
Selon une autre réalisation illustrée sur la figure 5a, deux barres sont placées horizontalement et deux barres verticalement.
Selon une autre forme de réalisation selon la figure 5b, toutes les barres pourront être disposées horizontalement, une barre de neutre 12 étant disposée à la partie supérieure du dispositif de répartition et trois barres de phase 13,14,15 sous la barre de neutre 12, les barres étant alors reliées aux moyens de connexion par des éléments deux fois coudés à angle droit.
Selon une réalisation non illustrée, les barres pourront également être disposées toutes verticalement à l'arrière du répartiteur et reliées à un moyen de connexion au moyen d'un conducteur coudé une fois à angle droit.
Un autre solution pourrait consister en des barres de phase situées à l'arrière et une barre de neutre disposée en dessous du répartiteur et comportant une partie repliée sur elle-même en dessous du répartiteur.
On a donc réalisé grâce à l'invention un dispositif de répartition de puissance électrique permettant d'optimiser l'encombrement du répartiteur, la hauteur du répartiteur étant divisée par deux par rapport à la hauteur des répartiteurs actuels.
La solution proposée vise à utiliser l'espace libéré par l'agencement particulier des bornes, pour intégrer au même niveau que la répartition de l'alimentation de puissance, un système de traitement de signalisation et/ou de commande associé à au moins un bornier, ledit bornier étant destiné à relier les liaisons filaires de contrôle et de signalisation d'état de l'appareillage modulaire à un même bus de communication.
On notera que l'invention couvre l'intégration dans le dispositif de répartition de tout dispositif de gestion d'entrée/ sortie mettant à disposition un point de communication. L'invention s'applique à la répartition de puissance et au contrôle d'appareils modulaires tels des interrupteurs, des disjoncteurs, des interrupteurs différentiels etc,...et est particulièrement appropriée pour une gamme de calibre allant jusqu'à 200A environ par rangée.
On notera que le dispositif d'alimentation pourra être un jeu de barres en coffret, armoire ou cellule, un appareil tête de groupe etc...

## Revendications

1. Dispositif de répartition de l'alimentation de puissance électrique pour une rangée d'appareils modulaires (A) tels des disjoncteurs, ledit dispositif étant logé dans un boîtier, et comprenant un ensemble de barres d'alimentation (12, 13, 14, 15) disposées sensiblement parallèlement entre elles, lesdites barres comprenant un certain nombre de barres (13, 14, 15) reliées électriquement respectivement aux différentes phases électriques, et une barre de neutre (12) distribuant le neutre, ledit dispositif comportant des moyens de connexion des barres aux différents appareils électriques précités et également un dispositif de raccordement électrique du dispositif de répartition au dispositif d'alimentation électrique desdites barres, **caractérisé en ce que** les moyens de connexion précités (16,17,18,19) sont agencés suivant deux lignes de répartition à savoir respectivement une ligne de répartition comportant des bornes de phase et une ligne de répartition comportant des bornes de neutre, chaque pas de répartition comportant une borne de phase et une borne de neutre, la première ligne de répartition comportant un ensemble comportant, au moins une borne de phase, cet ensemble étant disposé de manière répétitive le long dudit répartiteur, **en ce que** le dispositif de raccordement électrique du dispositif de répartition est situé au dessus des lignes de répartition, **en ce que** le dispositif de répartition comporte en outre un dispositif de traitement (T) de signal et/ou de commande s'étendant sensiblement parallèlement auxdites barres (12,13,14,15) et étant situé au-dessus des lignes de répartition au même niveau que le dispositif de raccordement électrique précité, Le dispositif de raccordement précité étant situé d'un côté du dispositif de répartition, et le dispositif de traitement de signal et/ou de commande étant situé dans l'alignement du dispositif de raccordement électrique précité (2), dans l'encombrement en hauteur de ce dispositif de raccordement (2).

2. Dispositif de répartition selon la revendication 1, **caractérisé en ce que** le dispositif de traitement de signalisation et/ou de commande (T) comporte un bus de communication S.

3. Dispositif de répartition selon la revendication 1 ou 2, **caractérisé en ce que** le système de traitement de signalisation et/ou de commande (T) est associé à au moins un bornier (11) destiné à relier les liaisons filaires de signalisation et/ou de commande de l'appareillage modulaire à un même bus de communication.

4. Dispositif de répartition selon l'une quelconque des revendications 1 à 3, **caractérisé en ce que** les moyens de connexion précités (16 à 19) du répartiteur comportent des bornes du type à raccordement élastique, des bornes dites quart de tour, des systèmes à déplacement d'isolant ou des systèmes embrochables.

5. Dispositif de répartition selon la revendication 4, **caractérisé en ce que** les barres sont reliées électriquement auxditcs bornes par des éléments conducteurs coudés.

6. Dispositif de répartition selon l'une quelconque des revendications précédentes, **caractérisé en ce que** l'une au moins des barres (12 à 15 est (sont) disposée(s) verticalement à l'arrière du répartiteur (D) et **en ce que** les moyens de connexion précités comprennent des connecteurs plats reliés à la barre correspondante par une partie coudée à 90°.

7. Dispositif de répartition selon l'une quelconque des revendications 1 à 5, **caractérisé en ce que** l'une au moins des barres (12 à 15) est (sont) disposée(s) horizontalement à plat, et **en ce que** les moyens de connexion précités comportent des connecteurs plats reliés à la barre correspondante par une partie coudée deux fois à angle droit.

8. Dispositif de répartition selon la revendication 1, **caractérisé en ce que** le dispositif de raccordement précité est situé le long du répartiteur.

9. Dispositif de répartition selon l'une quelconque des revendications précédentes, **caractérisé en ce qu'**il comporte une première partie fixe (1) comportant les barres et une seconde partie mobile (9) comportant le dispositif de traitement.

10. Dispositif de répartition selon l'une quelconque des revendications 1 à 9, **caractérisé en ce qu'**il comporte une première partie (1) comportant les barres et une seconde partie (9) comportant le dispositif de traitement, les deux parties étant logées dans un même boîtier de manière à constituer un ensemble monobloc.

## Patentansprüche

1. Vorrichtung zur Verteilung der elektrischen Leistungsversorgung für eine Reihe von modularen Geräten (A) wie Schutzschalter, wobei die Vorrichtung in einem Gehäuse untergebracht ist und eine Einheit von Versorgungsschienen (12, 13, 14, 15) aufweist, die im Wesentlichen parallel zueinander angeordnet sind, wobei die Schienen eine bestimmte Anzahl von Schienen (13, 14, 15), die je elektrisch mit den verschiedenen elektrischen Phasen verbunden sind, und eine Neutralleiterschiene (12) enthalten, die den Neutralleiter verteilt, wobei die Vorrichtung Verbindungseinrichtungen der Schienen mit den erwähnten verschiedenen elektrischen Geräten und ebenfalls eine elektrische Anschlussvorrichtung der Verteilungsvorrichtung an die elektrische Versorgungsvorrichtung der Schienen aufweist,
**dadurch gekennzeichnet, dass** die erwähnten Verbindungseinrichtungen (16, 17, 18, 19) gemäß zwei Verteilungsleitungen angeordnet sind, d.h. einer Verteilungsleitung, die Phasenklemmen aufweist, und einer Verteilungsleitung, die Neutralleiterklemmen aufweist, wobei jeder Verteilungsschritt eine Phasenklemme und eine Neutralleiterklemme aufweist, wobei die erste Verteilungsleitung eine Einheit aufweist, die mindestens eine Phasenklemme aufweist, wobei diese Einheit wiederholt entlang des Verteilers angeordnet ist, dass die elektrische Anschlussvorrichtung der Verteilungsvorrichtung über den Verteilungsleitungen angeordnet ist, dass die Verteilungsvorrichtung außerdem eine Signalverarbeitungs- und/oder Steuervorrichtung (T) aufweist, die sich im Wesentlichen parallel zu den Schienen (12, 13, 14, 15) erstreckt und sich über den Verteilungsleitungen auf gleicher Höhe wie die erwähnte elektrische Anschlussvorrichtung befindet, wobei die erwähnte Anschlussvorrichtung sich auf einer Seite der Verteilungsvorrichtung befindet und die Signalverarbeitungs- und/oder Steuervorrichtung sich fluchtend zur erwähnten elektrischen Anschlussvorrichtung (2) in der Bauhöhe dieser Anschlussvorrichtung (2) befindet.

2. Verteilungsvorrichtung nach Anspruch 1, **dadurch gekennzeichnet, dass** die Signalverarbeitungs- und/oder Steuervorrichtung (T) einen Kommunikationsbus S aufweist.

3. Verteilungsvorrichtung nach Anspruch 1 oder 2, **dadurch gekennzeichnet, dass** das Signalverarbeitungs- und/oder Steuersystem (T) mindestens einem Anschlussblock (11) zugeordnet ist, der dazu bestimmt ist, die Signalisations- und/oder Steuer-Drahtverbindungen des modularen Geräts mit dem gleichen Kommunikationsbus zu verbinden.

4. Verteilungsvorrichtung nach einem der Ansprüche 1 bis 3, **dadurch gekennzeichnet, dass** die erwähnten Verbindungseinrichtungen (16 bis 19) des Verteilers Klemmen von der Art mit elastischem Anschluss, so genannte Drehklemmen, Systeme mit Isolierungsverschiebung oder steckbare Systeme aufweisen.

5. Verteilungsvorrichtung nach Anspruch 4, **dadurch gekennzeichnet, dass** die Schienen durch gekrümmte Leiterelemente elektrisch mit den Klemmen verbunden sind.

6. Verteilungsvorrichtung nach einem der vorhergehenden Ansprüche, **dadurch gekennzeichnet, dass** mindestens eine der Schienen (12 bis 15) senkrecht hinter dem Verteiler (D) angeordnet ist/sind, und dass die erwähnten Verbindungseinrichtungen Flachverbinder enthalten, die mit der entsprechenden Schiene durch einen um 90° gekrümmten Teil verbunden sind.

7. Verteilungsvorrichtung nach einem der Ansprüche 1 bis 5, **dadurch gekennzeichnet, dass** mindestens eine der Schienen (12 bis 15) waagrecht flach angeordnet ist/sind, und dass die erwähnten Verbindungseinrichtungen Flachverbinder aufweisen, die mit der entsprechenden Schiene durch einen zweimal rechtwinklig gekrümmten Teil verbunden sind.

8. Verteilungsvorrichtung nach Anspruch 1, **dadurch gekennzeichnet, dass** die erwähnte Anschlussvorrichtung sich entlang des Verteilers befindet.

9. Verteilungsvorrichtung nach einem der vorhergehenden Ansprüche, **dadurch gekennzeichnet, dass** sie einen ersten ortsfesten Teil (1), der die Schienen aufweist, und einen zweiten beweglichen Teil (9) aufweist, der die Verarbeitungsvorrichtung aufweist.

10. Verteilungsvorrichtung nach einem der Ansprüche 1 bis 9, **dadurch gekennzeichnet, dass** sie einen ersten Teil (1), der die Schienen aufweist, und einen zweiten Teil (9) aufweist, der die Verarbeitungsvorrichtung aufweist, wobei die zwei Teile im gleichen Gehäuse angeordnet sind, um eine einstückige Einheit zu bilden.

## Claims

1. Device for distributing the electrical power supply for a row of modular devices (A) such as circuit breakers, said device being housed in a housing, and comprising a set of power supply bars (12, 13, 14, 15) arranged substantially parallel to one another, said bars comprising a certain number of bars (13, 14, 15) linked electrically respectively to the different electrical phases, and a neutral bar (12) distributing the neutral, said device comprising means for connecting the bars to the different abovementioned electrical devices and also a device for electrically connecting the distribution device to the electrical power supply device for said bars,
**characterized in that** the abovementioned connection means (16, 17, 18, 19) are arranged according to two distribution lines, namely, respectively, a distribution line comprising phase terminals and a distribution line comprising neutral terminals, each distribution pitch comprising a phase terminal and a neutral terminal, the first distribution line comprising an assembly comprising at least one phase terminal, this assembly being arranged repetitively along said distributor, **in that** the electrical connection device for the distribution device is situated above the distribution lines, **in that** the distribution device further comprises a signal and/or control processing device extending substantially parallel to said bars (12, 13, 14, 15) and being situated above the distribution lines, at the same level as the abovementioned electrical connection device, the abovementioned connection device being situated on one side of the distribution device, and the signal and/or control processing device being situated in the alignment of the abovementioned electrical connection device (2), within the heightwise bulk of this connection device (2).

2. Distribution device according to Claim 1, **characterized in that** the signalling and/or control processing device (T) comprises a communication bus S.

3. Distribution device according to Claim 1 or 2, **characterized in that** the signalling and/or control processing system (T) is associated with at least one terminal block (11) intended to link the wired signalling and/or control links of the modular switchgear to one and the same communication bus.

4. Distribution device according to any one of Claims 1 to 3, **characterized in that** the abovementioned connection means (16 to 19) of the distributor comprise terminals of the elastic connecting type, so-called quarter-turn terminals, insulation displacement systems or pluggable systems.

5. Distribution device according to Claim 4, **characterized in that** the bars are linked electrically to said terminals by bent conductive elements.

6. Distribution device according to any one of the preceding claims, **characterized in that** at least one of the bars (12 to 15) is (are) arranged vertically at the rear of the distributor (D) and **in that** the abovementioned connection means comprise flat connectors linked to the corresponding bar by a part bent to 90°.

7. Distribution device according to any one of Claims 1 to 5, **characterized in that** at least one of the bars (12 to 15) is (are) arranged horizontally flat, and **in that** the abovementioned connection means comprise flat connectors linked to the corresponding bar by a part bent two times at right angles.

8. Distribution device according to Claim 1, **characterized in that** the abovementioned connection device is situated along the distributor.

9. Distribution device according to any one of the preceding claims, **characterized in that** it comprises a fixed first part (1) comprising the bars and a mobile second part (9) comprising the processing device.

10. Distribution device according to any one of Claims 1 to 9, **characterized in that** it comprises a first part (1) comprising the bars and a second part (9) comprising the processing device, the two parts being housed in one and the same housing so as to constitute a one-piece assembly.
